# EUROPÄISCHE PATENTANMELDUNG

(11) **EP 1 117 108 A1**
(43) Veröffentlichungstag der Anmeldung: **18.07.2001**
(21) Anmeldenummer: 01100591.5
(22) Anmeldetag: 10.01.2001
(51) Int. Cl.: H01G 9/008

(54) **Induktionsarmer Elektrolytkondensator**

(30) Priorität: 13.01.2000 DE 10001121
(71) Anmelder: EPCOS AG, 81541 München (DE)
(72) Erfinder: Will, Norbert, 89522 Heidenheim (DE)
(74) Vertreter: Epping Hermann & Fischer

(57) **Zusammenfassung**

Bei einem Elektrolytkondensator ist der Wickel in einem Becher angeordnet, welcher mit einer Abschlussplatte verschlossen ist. Die Außenkontaktierung erfolgt über Durchführungen in der Abschlussplatte, die über Bändchen mit dem Wickel verbunden sind. Bei einem besonders induktionsarmen Elektrolytkondensator werden die Bändchen so an die Durchführung herangeführt, dass die Kontaktierung aus Richtung Wickelmitte her erfolgt.

## Beschreibung

Die Erfindung betrifft einen induktionsarmen Elektrolytkondensator mit einem, in einem Becher angeordneten Wickel, der als Kathode und Anode fungierende Metallfolien aufweist. Der Becher ist mit einer elektrisch isolierenden Abschlussscheibe verschlossen. Diese weist eine Plus- und eine Minusdurchführung auf, die im Becher über elektrisch leitende Bändchen mit den Elektrodenfolien des Wickels verbunden sind und nach außen Anschlüsse zur äußere Kontaktierung bereitstellen.

Bei schellen Schaltvorgängen, die im Frequenzbereich Schaltfrequenzen von mehr als 1 MHz entsprechen können, ist die Eigeninduktivität von Elektrolytkondensatoren von Nachteil. Sie verzögert die Glättungsfunktion bei Spannungen und verschlechtert daher dessen Spannungsstöße mindernde Funktion in entsprechenden Schaltungen und führt zu einer verminderten Einsetzbarkeit des Kondensators.

Um die Eigeninduktivität eines Elektrolytkondensators und damit die Verzögerungen bei dessen Glättungsfunktion möglichst gering zu erhalten, wurden bereits zahlreiche Anstrengungen unternommen (siehe beispielsweise DE 297 18 066 U1). Zahlreiche dieser Anstrengungen laufen darauf hinaus, jeweils einzelne Induktivitäten, die zur Gesamtinduktivität eines Elektrolytkondensators beitragen, zu reduzieren.

Ein wesentlicher Punkt, der zur Erhöhung der Eigeninduktivität eines Elektrolytkondensators beiträgt, ist der zur sicheren Verschaltung geforderte Mindestabstand zwischen den beiden Durchführungen in der Abschlussplatte. Dieser bestimmt im wesentlichen auch den sogenannten Bändchenabstand des Wikkels, i.e. der Abstand der Kontaktierungspunkte der Bändchen am Wickel.

Weiterhin wird bei Elektrolytkondensatoren für eine sichere Kontaktierung ein Gewindeloch in der Durchführung mit ausreichender Tiefe zum Verbinden der Durchführung mit einer Schraube gefordert. Da unterhalb der Durchführung auch noch die Bändchen zur elektrischen Kontaktierung des Wickels durchgeführt und befestigt werden müssen, ist weiterer Platz, also ein höherer Abstand zwischen Durchführung und Wickel erforderlich. Dabei muss der Strom auf dem Weg von den Kontaktierungspunkten am Wickel über die Bändchen und die Durchführung einen Weg überbrücken, mit dessen zunehmende Länge auch die Induktivität des Elektrolytkondensators steigt. Im allgemeinen ist die Induktivität nahezu proportional zur Entfernung zwischen dem Wickel und der Ebene, innerhalb der der Kontakt nach außen hergestellt wird.

Bekannte Maßnahmen zur Verringerung der genannten Abstände erfordern bislang einen hohen technischen Aufwand, der sich in höheren Herstellkosten für den Kondensator niederschlägt.

Aufgabe der vorliegenden Erfindung ist es daher, einen induktionsarmen Elektrolytkondensator anzugeben, bei dem eine Verringerung der Eigeninduktivität durch einfache und kostengünstige Maßnahmen erfolgt.

Diese Aufgabe wird mit einem Elektrolytkondensator nach Anspruch 1 gelöst. Weitere Ausgestaltungen der Erfindung sind den Unteransprüchen zu entnehmen.

Für einen induktionsarmen Elektrolytkondensator schlägt die Erfindung vor, die Anschlussbändchen, die den Wickel mit den Durchführungen in der Abschlussplatte verbinden, von innen her, also aus Richtung Wickelmitte her an die Durchführungen heran zu führen. Dadurch wird der Raum zwischen Durchführung und Wickel frei, so dass der entsprechende Abstand zwischen Wickel und Durchführung reduziert und beispielsweise auf nahezu null eingestellt werden kann. Da dieser Abstand wesentlich die Induktivität des Kondensators bestimmt, wird diese dadurch reduziert.

Um die Anschlussbändchen von den Kontaktpunkten auf dem Wikkel hin zu ihren Anschlüssen an den Durchführungen so zu führen, dass unterschiedlich gepolte Bändchen keinen Kontakt miteinander bekommen, sind immer verschiedene Faltungen der Bändchen erforderlich, die einen gewissen Raum innerhalb des Bechers beanspruchen. Bei bekannten Lösungen werden die Faltungen unterhalb der Durchführungen vorgenommen. Bei der Erfindung sind die erforderlichen Faltungen in vorteilhafter Weise im Raum zwischen den Durchführungen angefordert. Dies verringert außerdem den erforderlichen Abstand der Anschlussbändchen unterschiedlicher Polarität und reduziert damit die Eigeninduktivität des Kondensators.

In einer weiteren vorteilhaften Ausgestaltung der Erfindung sind die Anschlussbändchen nicht direkt mit den Durchführungen verbunden, sondern mit einem, die Durchführungen seitlich überragenden Anschlusselement. Dieses kann so gestaltet sein, dass es eine Anschlussmöglichkeit für die Anschlussbändchen bietet. Möglich ist es jedoch auch, das Anschlusselement so zu gestalten, dass es mehrere Anschlussmöglichkeiten für verschiedene Bändchen bietet. Da die Kontaktierung der Bändchen erfindungsgemäß aus Richtung Wickelmitte her erfolgt, stehen Anschlusselemente zumindest zur Mitte des Wickels hin über die Durchführungen über.

Ein mögliches Anschlusselement ist eine Anschlussplatte, die an den Durchführungen befestigt sein kann, oder die zusammen mit den Durchführungen ein einstückiges insbesondere metallisches Formteil bilden kann. Vorzugsweise ist die Anschlussplatte in die Abschlussplatte integriert. Eine solche integrierte Anschlussplatte hat den weiteren Vorteil, dass sie in einfacher Weise als Verschluss in die Abschlussplatte eingesetzt werden kann und außerdem ausreichende Fläche zum Kontaktieren der Anschlussbändchen bereitstellt.

Als ein weiteres mögliches Anschlusselement kann am unteren Ende der Durchführungen eine Lasche angeordnet sein.

Im folgenden wird die Erfindung anhand von Ausführungsbeispielen und der dazugehörigen Figuren näher erläutert.
- Figur 1: zeigt einen Elektrolytkondensator mit herkömmlicher Kontaktierung im schematischen Querschnitt
- Figur 2: zeigt einen erfindungsgemäßen Kondensator im schematischen Querschnitt
- Figur 3: zeigt einen erfindungsgemäßen Kondensator mit Anschlusselement im schematischen Querschnitt
- Figur 4: zeigt einen Kondensator mit Anschlussplatte in schematischer Draufsicht
- Figur 5: zeigt einen Kondensator mit einer separaten Kontaktplatte
- Figur 6: zeigt einen Kondensator mit einer tiefer gelegten Kontaktierungsebene
- Figur 7: zeigt einen Kondensator, bei dem die Minusdurchführung mit dem Becher verbunden ist
- Figur 8: zeigt einen Kondensator mit laschenförmigem Anschlusselement und
- Figur 9: zeigt eine weitere Anschlussmöglichkeit für Anschlussbändchen.

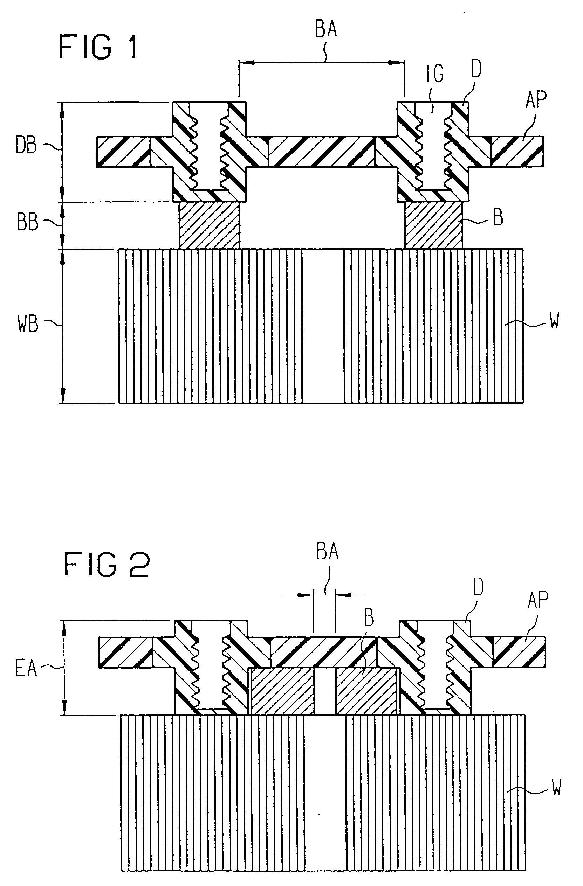

Figur 1 zeigt einen bekannten Elektrolytkondensator mit einem Wickel W, der aus gegeneinander isolierten, aufgewickelten, als Kathode und Anode dienenden Elektrodenfolien besteht. Der Wickel ist in einen Becher (in der Figur nicht dargestellt) eingestellt, der mit Elektrolytflüssigkeit gefüllt ist. Als Verschluss des den Kondensator enthaltenden Bechers dient eine elektrisch isolierende Abschlussplatte AP, in die zwei metallische Durchführungen D eingebettet sind. Über Anschlussbändchen B, die an verschiedenen Elektrodenfolien des Wickels W befestigt sind, ist der Wickel mit den Durchführungen D elektrisch leitend verbunden. Die Bändchen B werden dabei von unten an die Durchführung geleitet, wobei sich ggf. erforderliche Faltungen der Bändchen ebenfalls unterhalb der Durchführungen D befinden. Während innerhalb des Wickelbereichs WB praktisch keine Eigeninduktivität erzeugt wird, ist der gesamte übrige Strompfad zwischen dem Wickel und der Kontaktierungsebene, in der der äußere Anschluss erfolgt, für die Induktivität entscheidend. Wesentlichen Beitrag liefert dazu der Bändchenabstand BA zwischen unterschiedlich gepolten Anschlussbändchen B. Auch der Abstand BB zwischen dem oberen Ende des Wickels W und der Durchführung D, innerhalb dem der Strom durch die Bändchen samt deren Faltungen fließt, trägt einen wesentlich zur Eigeninduktivität des Kondensators bei. Auch der Durchführungsbereich bzw. dessen Höhe ist für die Induktivität entscheidend. Die Höhe des Durchführungsbereichs ist dabei durch das Innengewinde bestimmt, über das äußere Anschlüsse an den Durchführungen befestigt werden können.

Figur 2 zeigt im schematischen Querschnitt eine einfache Ausführungsform der Erfindung. Im Unterschied zu bekannten Elektrolytkondensatoren wird dabei der Bereich BB minimiert. Im dargestellten Fall setzten die Durchführungen D praktisch unmittelbar auf dem Wickel W auf. Die Bändchen und ggf. dafür erforderliche Faltungen sind im Bereich zwischen den beiden unterschiedlich gepolten Durchführungen D angeordnet. Dadurch ist auch der Bändchenabstand BA minimiert.

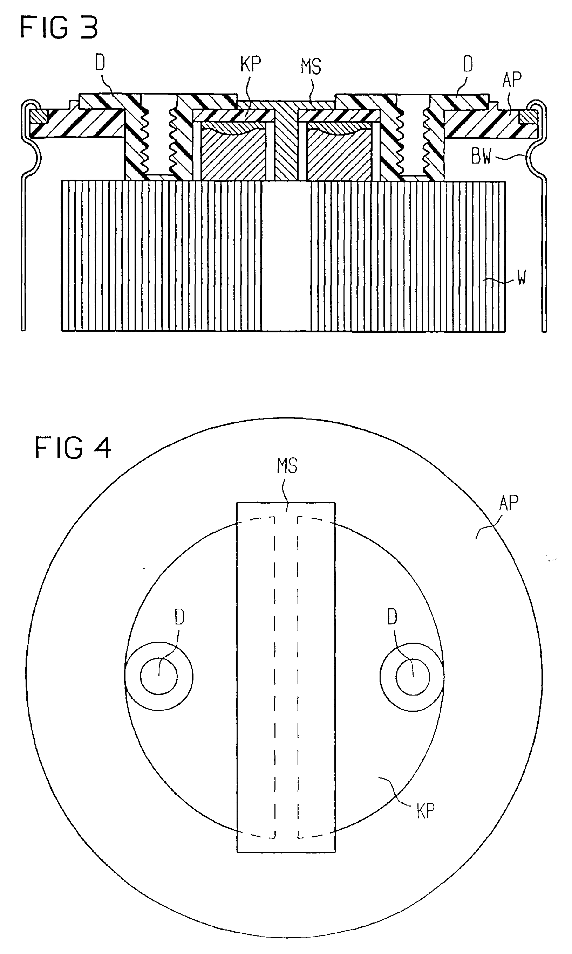

Figur 3 zeigt eine weitere Ausführungsform der Erfindung, bei der der Anschluss der Bändchen B an die Durchführungen D erleichtert ist. Die Bändchen B werden an einer Kontaktplatte KP befestigt, die in der Ebene der Anschlussplatte AP liegt und mit den Durchführungen D kontaktiert ist. Großer Vorteil dieser Anordnung ist, dass die Bändchen B nahezu ohne Faltung nach oben zur Kontaktplatte KP geführt und dort befestigt werden können. Die Kontaktplatte KP kann ein gesondertes Teil sein, in einer bevorzugten Ausführungsform der Erfindung wird sie jedoch zusammen mit den Durchführungen als einstückiges Element gefertigt. Mit Hilfe eines Mittelstückes MS kann sie als integrales Bauteil in die Abschlussplatte AP eingesetzt werden. In dieser Figur ist zusätzlich noch ausschnittsweise eine Becherwand BW dargestellt, die das äußere Gehäuse für den Kondensator bildet.

Figur 4 zeigt die in Figur 3 dargestellte Anordnung in einer schematischen Draufsicht. Durchführungen D und Kontaktplatte KP können ein- oder zweistückig sein, wobei die beiden Durchführungen und die dazugehörigen Kontaktplatten KP elektrisch voneinander getrennt sind. Mit Hilfe eines elektrisch isolierenden Mittelstückes MS können beide Kontaktplatten verbunden sein und somit als ein Stück die Handhabung zur Einsetzung in die Abschlussplatte AP erleichtern.

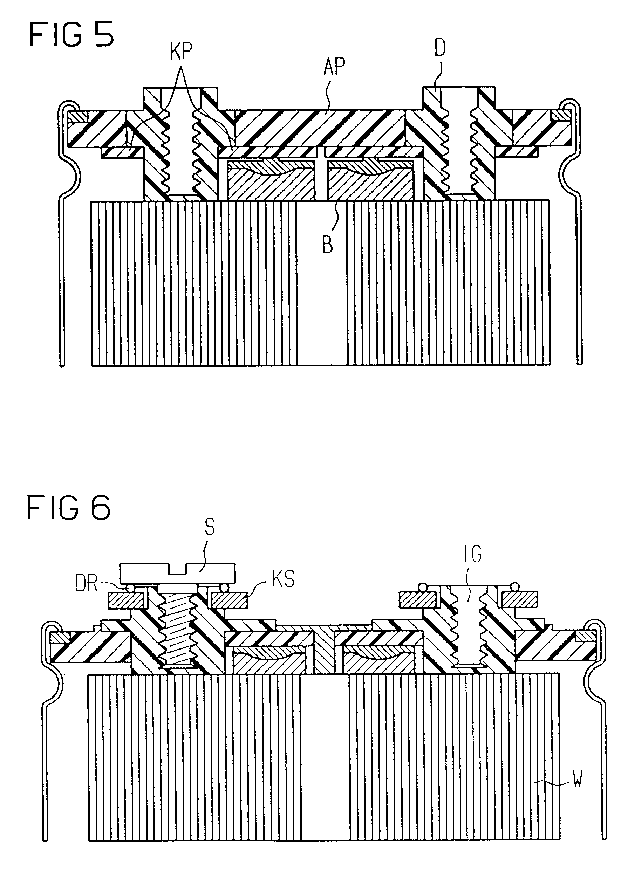

Figur 5 zeigt eine weitere Ausführungsform der Erfindung, bei der als Anschlusselement eine Kontaktplatte KP vorgesehen ist, die als gesondertes Element unterhalb der Anschlussplatte AP angeordnet ist. Auch hier werden die Bändchen B mit der Kontaktplatte KP verbunden.

Figur 6 zeigt eine weitere Möglichkeit, die Eigeninduktivität des erfindungsgemäßen Kondensators zu erniedrigen, in dem die Kontaktierungsebene der äußeren Anschlüsse nach unten verlegt wird. Da die Höhe der Durchführungen durch das Innengewinde IG bedingt ist, kann die Kontaktierungsebene nur durch zusätzliche Maßnahme tiefer gelegt werden. In dem gezeigten Ausführungsbeispiel wird eine Kontaktschiene KS oberhalb der Abschlussplatte aber unterhalb der Oberkante der Durchführungen D angeordnet und mit Hilfe einer Schraube über einen Druckring DR fixiert. Durch den hier reduzierten Abstand zwischen Kontaktierungsebene (= Ebene der Kontaktschiene KS) zur Oberkante des Wickels W ist auch die Eigeninduktivität des Kondensators reduziert.

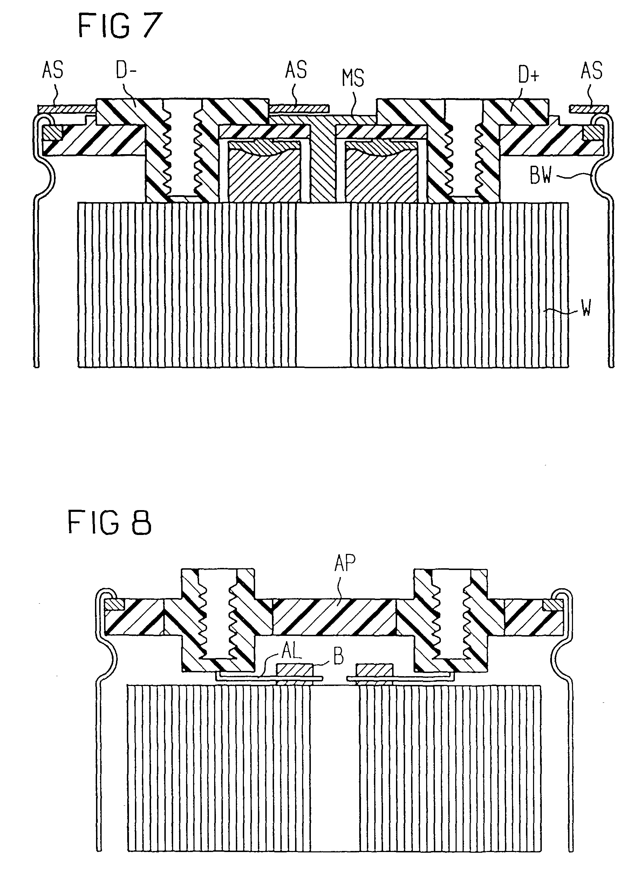

Figur 7 zeigt eine weitere Ausführungsform, bei der die Induktivität des Kondensators durch Eröffnen neuer Stromwege über die Becherwand reduziert wird. Dazu wird die mit der Kathode verbundene Minusdurchführung D⁻ elektrisch leitend mit der Becherwand BW verbunden. Dies kann über eine Anschlussscheibe AS erfolgen, die auf der Anschlussplatte aufliegt und mit der Minusdurchführung D⁻ kontaktiert ist. Die Plusdurchführung D⁺ ist gegen die Anschlussscheibe AS elektrisch isoliert. Möglich sind jedoch weitere, im einzelnen nicht aufzuführende elektrisch leitende Verbindungen der Minusdurchführung D mit der Becherwand BW.

Figur 8 zeigt eine Möglichkeit, den Faltungsaufwand der Bändchen zu reduzieren, den Anschluss der Bändchen an die Durchführungen zwischen diesen vorzunehmen und dabei noch den Abstand zwischen Abschlussplatte AP und oberer Fläche des Wikkels W zu reduzieren. Dazu sind die Durchführungen D mit Anschlusselementen in Form von nach innen gebogenen Anschlusslaschen AL ausgeführt. Diese Anschlusslaschen weisen zumindest eine ösenförmige Öffnung auf, durch die die Bändchen B geführt werden können. Vorzugsweise steht die Öffnung der Laschen so, dass ein Bändchen horizontal, also parallel zur Abschlussplatte durchgeführt werden kann. Diese Ausführung hat den Vorteil, dass sie einen einfachen Anschluss der Bändchen erlaubt. Außerdem kann die Anschlusslasche AL in einfacher Weise zu dem entsprechenden Kontaktpunkt oder den Kontaktpunkten der Bändchen B geführt werden, so dass der gesamte Stromweg bei minimalem Bändchenabstand weiter reduziert ist.

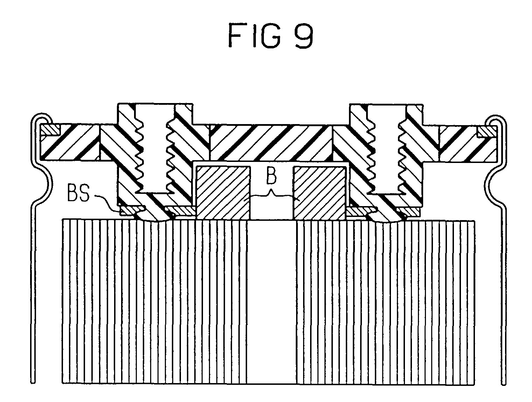

Figur 9 zeigt eine weitere Möglichkeit, die Bändchen mit den Durchführungen zu verbinden. Dazu werden die erforderlichen Faltungen der Bändchen B zwischen den beiden Durchführungen D vorgenommen und die Bändchen anschließend so gelegt, dass sie parallel zur Oberkante des Wickels übereinander gestapelt verlaufen. In dieser Form werden sie unterhalb der Durchführungen mit diesen befestigt. Auch auf dieser Weise wird der Bändchenbereich BB im Vergleich zur bekannten und in Figur 1 dargestellten Ausführung reduziert. Über die gestapelten und elektrisch miteinander kontaktierten Bändchen im Bändchenstapel können sich bifillare Strömungen ausbilden, die besonders wenig Induktivität erzeugen.

Vergleichende Induktivitätsmessungen mit den unterschiedlichen Ausführungen der Erfindung zeigen, dass sämtliche Ausführungsbeispiele den Induktivitätswert des Elektrolytkondensators erniedrigen. Während für eine bekannte in Figur 1 dargestellte Lösung 17,7nH gemessen werden, kann dieser Wert durch Vorsehen einer Kontaktplatte wie etwa in Figur 5 auf 10,8nH erniedrigt werden. Noch bessere Werte werden erhalten, wenn für die Kathode zusätzliche Stromwege über die Becherwand geschaffen werden, wie dies in Figur 4 vorgesehen ist. Für eine solche Anordnung wird eine Induktivität von 7,65nH gemessen, was mehr als eine Halbierung des bekannten ursprünglichen Wertes darstellt. Keine der erfindungsgemäßen Ausführungsformen erfordert einen übermäßigen konstruktiven Aufwand, teilweise ist der Kontaktierungsaufwand gegenüber der bekannten Lösung sogar erniedrigt. Auch ist die Erfindung nicht auf die gezeigten Ausführungsbeispiele beschränkt, die lediglich mögliche Ausgestaltungen darstellen. Im Rahmen der Ansprüche sind noch weitere Variationen denkbar.

## Patentansprüche

1. Induktionsarmer Elektrolytkondensator
- mit einem in einem Becher angeordneten Wickel, der als Kathode und Anode fungierende Metallfolien aufweist
- mit einer elektrisch isolierenden Abschlussscheibe auf dem Becher,
- mit einer Plus- und einer Minus-Durchführung für die Stromanschlüsse in der Abschlussscheibe,
- mit metallischen Anschlussbändchen, die über Kontaktpunkte auf der Oberfläche des Wickels jeweils die Anode und die Kathode des Wickels mit der entsprechenden Durchführung elektrisch leitend verbinden
- wobei die Anschlussbändchen so an die Durchführungen herangeführt sind, dass die Kontaktierung mit den Durchführungen aus Richtung Wickelmitte her erfolgt.

2. Kondensator nach Anspruch 1,
bei dem sämtliche erforderlichen Faltungen der Anschlussbändchen im Raum zwischen den Durchführungen angeordnet sind.

3. Kondensator nach Anspruch 1 oder 2,
bei dem die Durchführungen bis unmittelbar auf Oberfläche des Wickels reichen.

4. Kondensator nach einem der Ansprüche 1-3,
bei dem die Anschlussbändchen mit einem die Durchführungen seitlich überragenden Anschlusselement verbunden sind.

5. Kondensator nach Anspruch 4,
bei dem das Anschlusselement eine Anschlussplatte ist.

6. Kondensator nach Anspruch 4,
bei dem das Anschlusselement eine am unteren Ende der Durchführungen angeordnete, in Richtung Wickelachse abbiegbare Lasche ist.

7. Kondensator nach Anspruch 6,
bei dem die Lasche eine horizontal geöffnete Durchführung für ein Anschlussbändchen aufweist.

8. Kondensator, nach Anspruch 5,
bei dem die Anschlussplatte in die Abschlussscheibe integriert ist.

9. Kondensator nach einem der Ansprüche 1-8,
bei dem die Durchführungen ein von außen zugängliches Innengewinde zum Verbinden mit externen Anschlüssen aufweisen.

10. Kondensator nach einem der Ansprüche 1-9,
bei dem die Minusdurchführung mit dem elektrisch leitenden Becher verbunden ist.

11. Kondensator nach Anspruch 10,
bei dem Minusdurchführung über eine Kontaktscheibe mit dem Becher verbunden ist.

12. Kondensator nach Anspruch 9,
bei dem eine tiefer als der obere Rand der Durchführung liegende Anschlussmöglichkeit für die externen Anschlüsse vorgesehen ist.
